Europäisches Patentamt

European Patent Office

Office européen des brevets

(19)

(11) **EP 0 388 089 B1**

(12)

# EUROPEAN PATENT SPECIFICATION

(45) Date of publication and mention
of the grant of the patent:
**16.10.1996 Bulletin 1996/42**

(51) Int Cl.6: **G06T 3/40**, H04N 1/40

(21) Application number: **90302519.5**

(22) Date of filing: **08.03.1990**

(54) **Image processing apparatus**

Bildverarbeitungsgerät

Appareil de traitement d'image

(84) Designated Contracting States:
**DE FR GB**

(30) Priority: **15.03.1989 JP 60753/89**

(43) Date of publication of application:
**19.09.1990 Bulletin 1990/38**

(73) Proprietor: **International Business Machines
Corporation
Armonk, N.Y. 10504 (US)**

(72) Inventor: **Itoh, Masaharu
Yamato-shi, Kanagawa-ken (JP)**

(74) Representative: **Burt, Roger James, Dr.
IBM United Kingdom Limited
Intellectual Property Department
Hursley Park
Winchester Hampshire SO21 2JN (GB)**

(56) References cited:
**EP-A- 0 105 707**       **US-A- 4 841 375**

## Description

The invention relates to image processing apparatus for converting the resolution of an image comprised of a number of picture elements (pels).

Prior art methods for converting resolution of pel-based images may be classified into two groups. The first group uses a table which stores addresses of the pels of an original image. The addresses represent the pels of an original image which are selectively picked up to form a scaled down or reduced image. In an enlargement of the original image, addresses are used which represent the pels of the original image which may be used once or many times according to the ratio of enlargement.

An article "System for converting resolution", IBM Technical Disclosure Bulletin, Vol. 31, No. 6, November 1988, pp. 324 - 327 shows an example of such a table for reducing the number of pels of the original image. The problem with this method is that different tables must be prepared for different scale ratios.

The second group of methods use an algorithm for scaling the original image. These methods do not require the tables of the first method. A typical such algorithm is Bresenham's algorithm which is described in 'Algorithm for Computer Control of a digital Plotter' J.E. Bresenham IBM Systems Journal, Vol. 4, no. 1, 1965. Pages 25-30. Bresenham's algorithm is known as a line generator which is used for scaling up or down the image. The problem with the use of Bresenham's line generator is that, to perform both the scaling up and scaling down operations, two such Bresenham's line generators are required, and additional program steps are required to determine which operation is selected. The use of the two line generators increases the cost and decreases the performance of the operation.

Another such algorithm is known as the digital differential analyser (DDA). For example if 50 pels are reduced or scaled down to 30 pels. First, a calculation 50/30 is performed. The rounded value 1.666 is then stored in a register which is updated by repeatedly adding the value 1.666 to the stored value. The updated values are 1.666, 3.332, 4.998, 6.664, etc. The integral part of this is used for the address of the pel of the original image to form the scaled down image. In this example, first, third, fourth, sixth pels, etc. of the original image are picked up to form the scaled down image. The problem of the DDA is that an error is inherently generated due to the division, and the calculation time required is long, so that the performance of the DDA is low in comparison with the present invention.

According to the present invention there is provided image processing apparatus for converting N input image picture elements to M output image picture elements, where N and M are positive integers, the apparatus including: an input buffer including N memory positions for storing picture element data of said N input image picture elements; a first address counter indicating a memory position in said input buffer; an output buffer including M memory positions for storing picture element data of said M output image picture elements; a second address counter indicating a memory position in said output buffer; a register for storing a sum value, the initial value S of which is an integer satisfying $-N \leq S < M$; means for generating a first signal if said sum value is not negative and a second signal if said sum value is negative; means responsive to said first signal to store said picture element data from the memory position of said input buffer indicated by said first address counter in the memory position of said output buffer indicated by said second address counter, to update said sum value by adding said value -N to said sum value, and to increment said second address counter indicating said memory position of said output buffer, and responsive to said second signal to update said sum value by adding the value M to said sum value, and to increment said first address counter indicating said memory position of said input buffer, the apparatus comprising control means for repeatedly performing said storing operations, said updating operations and said incrementing operations until picture element data of said M picture elements have been stored in said output buffer.

In an initial set up sequence, N pels of an original image are stored in N memory positions of an input buffer, respectively. The N pels are converted to M pels, which are stored in M memory positions of an output buffer, respectively. M and N are positive integers. In the case of N < M, an enlargement of the original image is made, and in the case of N > M, a reduction of the original image is made. A first address counter pointing to a memory address of the input buffer is initially set to zero. A second address counter pointing to a memory address of the output buffer is also set to zero. The values -N, M, and an initial sum value S, where S is integer satisfying $-N \leq S < M$, are initially stored in three registers. The sum value S is repeatedly updated to control the scaling up operations or the scaling down operations.

A means is provided, which determines or checks as to whether or not the sum value is negative. This means generates a first signal if the sum value is not negative or a second signal if the sum value is negative. A means is provided, which responds to the first signal by storing or moving the pel data from a memory position of the input buffer pointed to by the first address counter to a memory position of the output buffer pointed to by the second address counter, updating the sum value by adding the value -N to the sum value and incrementing the memory address of the output buffer; and which means responds to the second signal by updating the sum value by adding the value M to the sum value, and incrementing the memory address of the input buffer. A control means is provided to control the operation and repeat the above steps until the M pels of the scaled image are formed.

An embodiment of the invention will now be described with reference to the following drawings wherein,

fig. 1 is a block diagram of an embodiment of the invention,

fig. 2 illustrates an example of a scaling up operation,

fig. 3 is a flow chart of the algorithm employed in an embodiment of the invention,

fig. 4 illustrates an example of a scaling down operation,

fig. 5 illustrates an example of the operation of the invention.

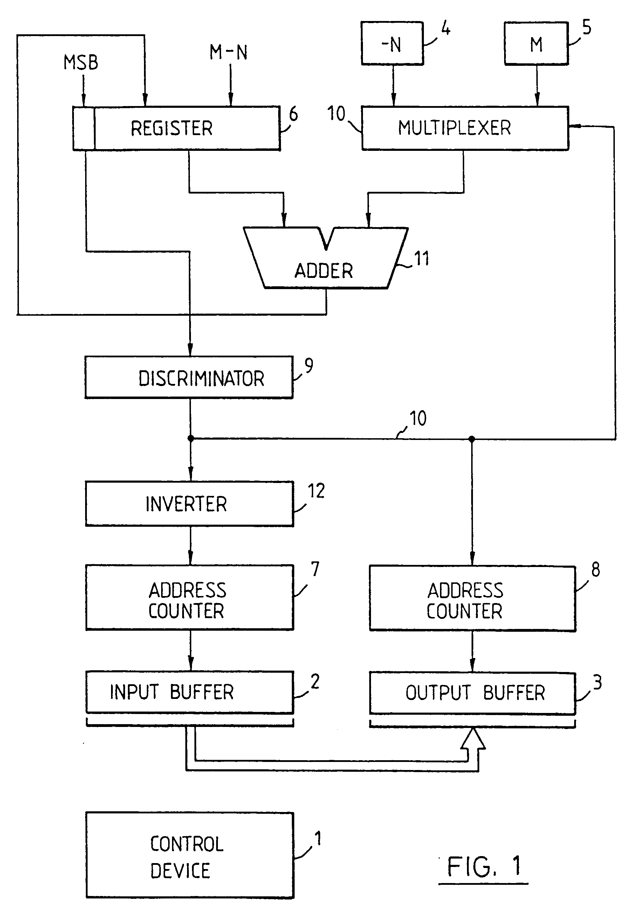

Fig. 1 shows a block diagram of an apparatus for converting N picture element (pels) of original image to M pels (N and M are positive integers) in accordance with the present invention. A control device (1), such as a microprocessor, controls the operations of the blocks in fig.1. Actually, a large number of control lines for controlling the operations of the blocks are connected between the control device (1) and the blocks. To simplify the drawing, however, these control lines are not shown in fig. 1.

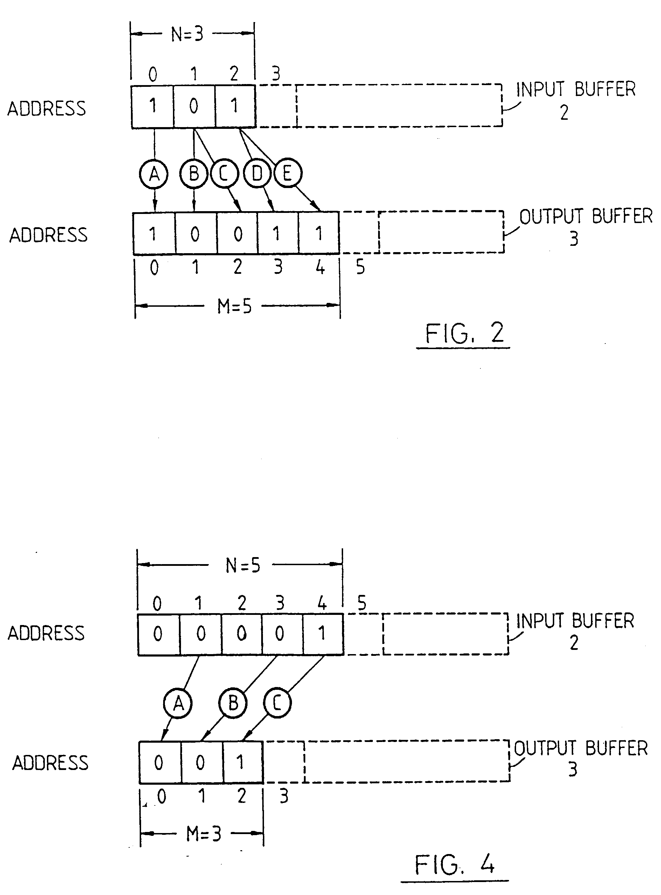

The apparatus shown in fig. 1 performs both scale up and scale down operations of the image. The operation of the apparatus is described by way of the example shown in fig. 2, wherein 3 pels of an original image, i.e. corresponding to N=3, are scaled up or enlarged to 5 pels, i.e. corresponding to M=5. The 3 pel image has pel data "101", and the image is stored in an input buffer (2).

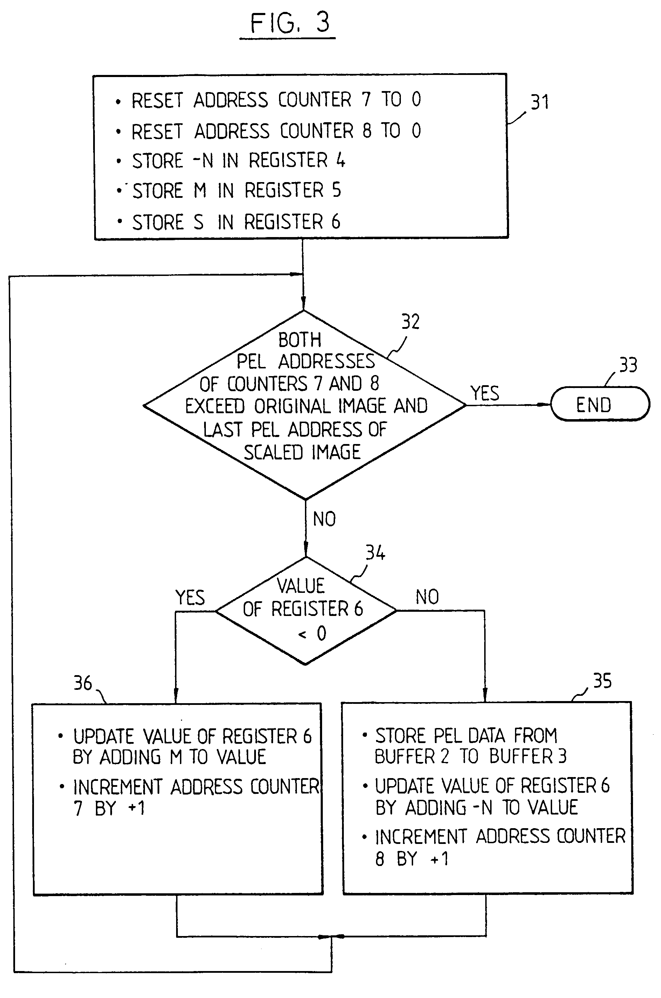

In an initial set up operation, the control device (1) sets first and second address counters (7, 8) to the value 0, stores the value -N (N=-3 in the example) in a first register (4), stores the value M (M=5 in the example) in a second register (5), and stores the initial sum value S, where S is an integer satisfying $-N \leq S < M$, in a third register (6). Any value satisfying this relationship may be used as the initial sum value S. Depending upon the value S, the bit pattern of the scaled image may vary slightly, as described below. In the described embodiment, the value M-N is used as the initial sum value S, which satisfies $-N \leq S < = M$. Therefore, the value M-N=2 is stored in the third register (6). The initial set up operations are represented by block 31 in figure 3.

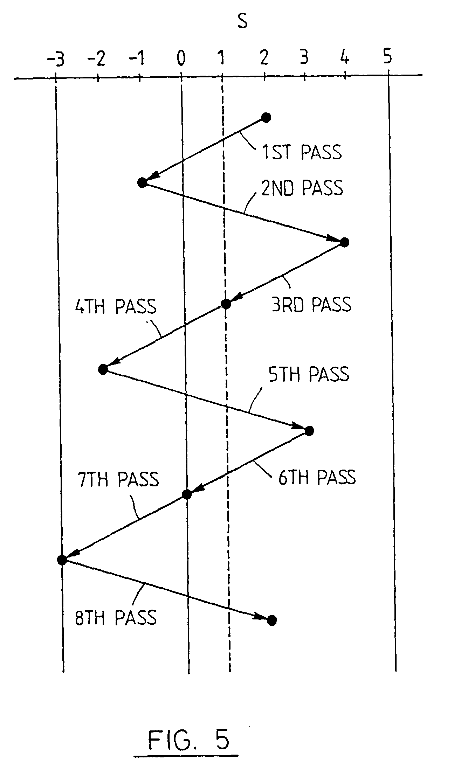

The operations proceed to block 32 in fig.3, and the control device (1) determines or checks as to whether or not the incremented addresses in the first and second address counters (7,8) which point to memory addresses of the input buffer (2) and the output buffer (3) respectively, exceed the addresses of last pel of the original image and the scaled image in the input (2) and output (3) buffers. If this is the case, the operations proceed to block 33 in fig.3. which terminates the scaling operations. If this is not the case, the operation proceeds to block 34 in fig.4, wherein a discriminator (9), under the control of the control device (1), determines or checks as to whether or not the sum value in the third register (6) is negative . The discriminator (9) checks the most significant bit (MSB) of the sum value stored in the third register (6). If the sum value is not negative, the MSB is "0", and if the sum value is negative, the MSB is "1". If the sum value in the third register (6) is not negative, the discriminator (9) generates a first signal indicating that the sum value is not negative on an output line (10). If the sum value in the third register (6) is negative, the discriminator (9) generates a second signal indicating that the sum value is negative on the output line (10). If the answer to the block 34 is NO, the first signal is generated and the operations proceed to block 35 in Fig.3, wherein the pel data stored in the address of the input buffer (2) pointed to by the first address counter (7) is stored or moved into the address of the output buffer (3) pointed to by the second address counter (8), the sum value in the third register (6) is updated by adding the value -N to the sum value, and the address in the address counter (8) is incremented by +1. The increment of the address counters (7, 8) is performed by the discriminator (9). The second address counter (8) is incremented by the first signal, e.g. up level signal, while the first address counter (7) is not incremented since the down level signal is supplied to the first address counter (7) through the inverter (12). When the discriminator (9) generates the second signal, e.g. down level signal, the down level signal is directly supplied to the second address counter (8), so that the second address counter (8) is not incremented, while the first address counter (7) is supplied with the up level signal which is inverted by the inverter (12), so that the first address counter (7) is incremented by +1.

The update operations are performed by the discriminator (9), a multiplexer (10), and an adder (11). If the sum value in the third register (6) is not negative, the discriminator (9) supplies the first signal to the multiplexer (10), which supplies the value -N in the register (4) to the adder (11). The adder (11) adds the value -N to the sum value in the third register (6), and the old sum value is replaced by the new or updated sum value calculated by the adder (11). The increment of the second address counter (8) by +1 is also performed in the block 35. The control device (1) controls the operations of the block 35.

If the answer of the block 34 is YES, the second signal is generated and the operations proceed to block 36 in fig. 3, wherein the the sum value in the third register (6) is updated by adding the value M to the sum value, and the address in the first address counter (7) is incremented by +1. To update the sum value in the third register (6), the discriminator (9) supplies the second signal to the multiplexer (10), which gates the value M from the second register (5) to the adder (11). The old value in the third register (6) is replaced by the new sum value from the adder (11). The increment of the first address counter (7) is also performed by the second signal.

The above operations of the blocks 32, 34, 35 and 36 are repeated as shown by the loop in the Fig.3, until block 32 detects the end of scaling operations.

With reference to figs. 2 and 5 and Table 1, a specific example of the operation of the invention is now described. It is required to increment the pel address of the original image and the pel address of the scaled image to realise an ideal scaling up or enlargement operation with the ratio of 3:5. The following relationship shown by equation 1 shows the above ideal address increment.

$$a/b = N/M \tag{1}$$

wherein:

a:   The number of increments of pel address of the original image
b:   The number of increments of pel address of the scaled image
M:   The number of pels of the original image
N:   The number of pels of the scaled image

$$aM - bN = 0 \tag{2}$$

The left side of the equation 2 represents the sum value S in the third register (6), and the right side of the equation 2 shows that the sum value in the third register (6) should approach the centre value, i.e. value 1, between the value -3 and the value 5 to prevent the sum value from exceeding the values -3 and 5, as shown in fig. 5. The decision block 34 in fig. 3 ensures that the updated sum value in each pass operation approaches the value 1. Thus, the blocks 34, 35 and 36 in fig. 3 realise the ideal movement of the pel data from the input buffer (2) to the output buffer (3), and the ideal increment of addresses of the original image and the scaled image. That is, the ratio of the number of operations shown by the arrows directed to the left side, i.e. the first, third, fourth, sixth and seventh pass operations, to the number of operations shown by the arrows directed to the right side, i.e. the second, fifth and eighth operations is 5:3, which performs the ideal scaling up operations as shown in fig.2.

In the following specific example the pel data "101" of the three pel original image is scaled up to 5 pels, as shown in fig 2.

In the initial set up operation described above, the control device (1) resets both the address counters (7, 8) to the address value 0, whereby the addresses 0 (Fig. 2) of the input buffer (2) and the output buffer (3) are pointed to. The control device (1) stores the value -3, i.e. -N, in the register (4), the value 5, i.e. M, in the second register (5), and the value 2, i.e. M-N, in the third register (6). The control device (1) also stores the pel data "101" in the input buffer (2), and resets the output buffer (3).

Next, the operations proceed to block 32 in fig.3, and determination is made as to whether the current pel address 0 in the first address counter (7) exceeds the last pel address 3 of the original image in the input buffer (2) and the current pel address 0 in the second address counter (8) exceeds the last pel address 4 of the scaled up image in the output buffer (3). In this case, the answer to block 32 is NO, the operations proceed to block 34, wherein the determination is made as to whether or not the sum value 2 in the third register (6) is negative. In this case, the answer is NO, and the first signal is generated by the discriminator (9), and the operations proceed to block 35, wherein the pel data or bit "1" in the address 0 of the input buffer (2), which is pointed to by the first address counter (7) is moved or stored to the address 0 in the output buffer (3) which is pointed by the second address counter (8), as shown in fig. 2. The first signal is supplied to the multiplexer (10) to gate the value -3 to the adder (11), which adds the value -3 to the old sum value 2 to generate new sum value -1 which is stored in the third register (6) as the updated sum value. The first signal is also applied to the second address counter (8) to increment its initial value 0 to the new address value 1.

Thus, the first pass operation from block 32 to block 35 has been completed, and the operation returns to the block 32 to initiate the second pass operation. The operations are repeated until block 32, which checks as to whether the scaled image "10011" has been formed in the output buffer (3), generates the output YES. The following Table 1 shows the operations performed in this example for scaling up or enlarging the three pel image "101" to the five pel image "10011", as shown in fig. 2.

TABLE 1

| | Register (6) | Block 32 | Block 36 | Block 35 |
|---|---|---|---|---|
| Initial set up | | 2 | | |
| 1st pass | 2 | No | | Move pel, as shown by (A) |
| | | | | Update Reg (6) to -1 |
| | | | | Increment counter (8) to 1 |
| 2nd pass | -1 | No | Update Reg (6) to 4 | |
| | | | Increment counter (7) to 1 | |
| 3rd pass | 4 | No | | Move pel, as shown by (B) |
| | | | | Update Reg (6) to 1 |
| | | | | Increment counter (8) to 2 |
| 4th pass | 1 | No | | Move pel, as shown by (C) |

5

Update Reg (6)
to -2

Increment
counter (8)
to 3

5th pass   -2   No   Update Reg (6)
to 3

Increment counter
(7) to 2

6th pass   3   No   Move pel, as
shown by (D)

Update Reg(6)
to 0

Increment
counter (8)
to 4

7th pass   0   No   Move pel, as
shown by (E)

Update Reg(6)
to -3

Increment
counter (8)
to 5

| 8th pass | -3 | No | Update Reg(6) to 2 |
| | | | Increment counter (7) to 3 |
| 9th pass | 2 | Yes | |

It is apparent that, in the first pass, the pel data or bit 1 at the address 0 in the input buffer (2) is moved to the address 0 in the output buffer (3); in the third pass and the fourth pass, the pel data or bit 0 at the address 1 in the input buffer (2) is moved to the addresses 1 and 2 in the output buffer (3); and in the sixth pass and seventh pass, the pel data or bit 1 at the address 2 in the input buffer (2) is moved to the addresses 3 and 4 in the output buffer (3), as shown in fig. 2.

In the 9th pass, the count value of the first address counter (7) is 3 which specifies the address 3 in the input buffer (2) shown in fig.2. It is apparent that the address 3 exceeds the last address, the address 2 in the case, of the original image in the input buffer (2). And, the count value of the second address counter (8) is 5 which specifies the address 5 in the output buffer (3) shown in fig. 2. It is apparent that the address 5 exceeds the last address, the address 4 in the case, of the scaled up image in the output buffer (3). Thus, block 32 generates the answer YES to terminate the scale up operations.

Although the value 2 was used as the selection of the initial sum value S in the scaling up operations in Table 1, another value, such as -1, satisfying the relationship $-N \leq S < M$ could have been used as the initial sum value. In the case of S = -1, the answer of block 34 in the first pass operations is YES, and the operation of block 36 is performed in the first pass operation, and, in accordance with the flow chart of fig.3, the succeeding operations, i.e. the second, third, fourth pass operations, etc. are performed, so that a different bit pattern from the bit pattern shown in the output buffer (3) in fig. 2 would be generated. Thus, by using any initial sum value satisfying $-N \leq S < M$, the scaled image of various bit patterns may be obtained.

Next, another specific example is described, wherein the pel data "00001" of the five pel original image is reduced or scaled down to the three pel image, as shown in fig.4, with reference to the following Table 2.

## TABLE 2

| | Register 6 | Block 32 | Block 36 | Block 35 |
|---|---|---|---|---|
| Initial set up | | -2 | | |
| 1st pass | -2 | No | Update Reg(6) to 1<br><br>Increment counter (7) to 1 | |
| 2nd pass | 1 | No | | Move pel, as shown by (A)<br><br>Update Reg(6) to -4<br><br>Increment counter (8) to 1 |
| 3rd pass | -4 | No | Update Reg (6) to -1<br><br>Increment counter (7) to 2 | |
| 4th pass | -1 | No | Update Reg(6) to 2<br><br>Increment counter (7) to 3 | |
| 5th pass | 2 | No | | Move pel, as shown by (B) |

| | | | | Update Reg(6) to -3 |
| --- | --- | --- | --- | --- |
| | | | | Increment counter (8) to 2 |
| 6th pass | -3 | No | Update Reg(6) to 0 | |
| | | | Increment counter (7) to 4 | |
| 7th pass | 0 | No | | Move pel, as shown by (C) |
| | | | | Update Reg(6) to -5 |
| | | | | Increment counter (8) to 3 |
| 8th pass | -5 | No | Update Reg (6) to -2 | |
| | | | Increment counter (7) to 5 | |
| 9th pass | -2 | Yes | | |

In the initial set up operations, the control device (1) resets both the address counters (7, 8) to the address value 0, whereby the address 0 (Fig. 4) of the input buffer (2) and the output buffer (3) is pointed to. The control device (1) stores the value -5, i.e. -N, in the first register (4), the value 3, i.e. M, in the second register (5), and the value -2, i.e. M-N, in the third register (6). The control device (1) also stores the five pel data "00001" in the input buffer (2), and resets the output buffer (3).

Next, the operations proceed to block 32 in the Fig.3, and the determination is made whether the current pel address 0 in the first address counter (7) exceeds the last pel address 5 of the original image in the input buffer (2), and the current pel address 0 in the second address counter (8) exceeds the last pel address 2 of the scaled image in the output buffer (3). The operations are shown as the first pass in Table 2. In this case, the answer of block 32 is NO, the operation proceeds to block 34, wherein the determination is made as to whether the sum value -2 in the third register (6) is negative, or not. In this case, the answer is YES, and the second signal is generated by the discriminator (9), and the operations proceed to block 36, wherein the multiplexer (10) responding to the second signal gates the value 3 from the second register (5) to the adder (11) which generates the new sum value 1, and the initial value -2 is replaced by the new value 1. The second signal, e.g. the down level signal is inverted by the inverter (12), and the up level signal is applied to the first address counter (7), whereby the first address counter (7) is incremented to the value 1.

The operations starting from block 32 are repeated as the second pass, the third pass, and so on until the ninth pass, as shown in Table 2.

In the ninth pass, the count value of the first address counter (7) is 5 which points to the address 5 in the input buffer (2) shown in fig. 4. It is apparent that the address 5 exceeds the last pel address, the address 4 in the case, of the original image in the input buffer (2). And, the count value of the second address counter (8) is 3 which points to the address 3 in the output buffer (3) shown in the fig. 4. It is apparent that the address 3 exceeds the last pel address, the address 2 in the case, of the scaled up image in the output buffer (3). Thus, block 32 generates the answer YES to terminate the scale down operations.

It is apparent that, in the second pass, the pel data or bit 0 at the address 1 in the input buffer (2) is moved to the address 0 in the output buffer (3); in the fifth pass, the pel data or bit 0 at the address 3 in the input buffer (2) is moved to the address 1 in the output buffer (3), and, in the seventh pass, the pel data or bit 1 at the address 4 in the input buffer (2) is moved to the address 2 in the output buffer (3), as shown in fig. 4.

The present invention provides high speed pel conversion which is comparable to Bresenham's algorithm. The remarkable difference between the present invention and the Bresenham's algorithm is that the present invention performs both the scaling up and scaling down operations, whereas two Bresenham's line generators are required to perform scaling up and down operations, i.e. one for the scaling up and the other for the scaling down, and a determination is required to select the line generator for the scaling up or the line generator for the scaling down. The present invention, therefore, reduces the cost of the hardware and improves the performance of the operation.

The reduction in the number of processing steps for changing resolution has been much needed in image processing. The present invention requires a minimum number of processing steps as shown in fig. 3, and therefore provides high speed pel conversion.

## Claims

1. Image processing apparatus for converting N input image picture elements to M output image picture elements, where N and M are positive integers, the apparatus including:

    an input buffer (2) including N memory positions for storing picture element data of said N input image picture elements;

    a first address counter (7) indicating a memory position in said input buffer (2);

    an output buffer (3) including M memory positions for storing picture element data of said M output image picture elements;

    a second address counter (8) indicating a memory position in said output buffer;

    a register (6) for storing a sum value, the initial value S of which is an integer satisfying $-N \le S < M$;

    means (9) for generating a first signal if said sum value is not negative and a second signal if said sum value is negative;

    means responsive to said first signal to store said picture element data from the memory position of said input buffer indicated by said first address counter in the memory position of said output buffer indicated by said second address counter, to update said sum value by adding said value -N to said sum value, and to increment said second address counter indicating said memory position of said output buffer,

    and responsive to said second signal to update said sum value by adding the value M to said sum value, and to increment said first address counter indicating said memory position of said input buffer, the apparatus comprising control means (1) for repeatedly performing said storing operations, said updating operations and said incrementing operations until picture element data of said M picture elements have been stored in said output buffer.

# EP 0 388 089 B1

**Patentansprüche**

1. Eine Bildverarbeitungsvorrichtung zum Umsetzen von N Eingangsbild-Bildelementen auf M Ausgangsbild-Bildelemente, wobei N und M positive ganze Zahlen sind, und die Vorrichtung aufweist:

   Einen Eingangs-Zwischenspeicher (2), der N Speicherpositionen zum Speichern von Bildelementdaten der N Eingangsbild-Bildelemente beinhaltet;

   einen ersten Adressenzähler (7), der eine Speicherposition in dem Eingangs-Zwischenspeicher (2) anzeigt;

   einen Ausgangs-Zwischenspeicher (3), der M Speicherpositionen zum Speichern von Bildelementdaten der M Ausgangsbild-Bildelemente beinhaltet;

   einen zweiten Adressenzähler (8), der eine Speicherposition in dem Ausgangs-Zwischenspeicher anzeigt;

   ein Register (6) zum Speichern eines Summenwertes, dessen anfänglicher Wert S eine ganze Zahl ist, die der Bedingung -N ≤ S < M genügt;

   Mittel (9) zum Erzeugen eines ersten Signals, wenn der Summenwert nicht negativ ist, und eines zweiten Signals, wenn der Summenwert negativ ist;

   Mittel, die auf das erste Signal reagieren,

   zum Speichern der Bildelementdaten von der Speicherposition des Eingangs-Zwischenspeichers, die durch den ersten Adressenzähler angezeigt werden, in der Speicherposition des Ausgangs-Zwischenspeichers,

   die durch den zweiten Adressenzähler angezeigt werden,

   um den Summenwert durch Addieren des Wertes -N zu dem Summenwert zu aktualisieren, und

   um den zweiten Adressenzähler, der die Speicherposition des Ausgangs-Zwischenspeichers anzeigt, zu erhöhen,

   und die auf das zweite Signal reagieren,

   zum Aktualisieren des Summenwertes durch Addieren des Wertes M zu dem Summenwert, und

   um den ersten Adressenzähler, der die Speicherposition des Eingangs-Zwischenspeichers anzeigt, zu erhöhen,

   und die Vorrichtung Steuermittel (1) aufweist zum wiederholten Ausführen der Speicheroperationen, der Aktualisierungsoperationen und der Erhöhungsoperationen bis die Bildelementdaten der M Bildelemente in dem Ausgangs-Zwischenspeicher gespeichert sind.

**Revendications**

1. Appareil de traitement d'image pour convertir N éléments d'image d'entrée en M éléments d'image de sortie, dans lequel N et M sont des nombres entiers positifs, l'appareil comprenant :

   un tampon d'entrée (2) comprenant N positions de mémoire pour stocker des données d'éléments d'image desdits N élément d'image d'entrée;

   un premier compteur d'adresses (T) indiquant une position de mémoire dans ledit tampon d'entrée (2);

   un tampon de sortie (3) comprenant M positions de mémoire pour stocker des données d'éléments d'image desdits M éléments d'image de sortie;

11

un deuxième compteur d'adresses (8) indiquant une position de mémoire dans ledit tampon de sortie;

un registre (6) pour stocker une valeur de somme, la valeur initiale S de cette dernière étant un nombre entier satisfaisant à la relation $-N \leq S < M$;

un moyen (9) pour produire un premier signal si ladite valeur de somme n'est pas négative et un deuxième signal si ladite valeur de somme est négative;

un moyen sensible au dit premier signal pour stocker lesdites données d'éléments d'image provenant de la position de mémoire dudit tampon d'entrée, indiqué par ledit premier compteur d'adresses dans la position de mémoire dudit tampon de sortie, indiqué par ledit deuxième compteur d'adresses, pour actualiser ladite valeur de somme en ajoutant ladite valeur $-N$ à ladite valeur de somme, et pour incrémenter ledit deuxième compteur d'adresses indiquant ladite position de mémoire dudit tampon de sortie,

et sensible audit deuxième signal pour actualiser ladite valeur de somme en ajoutant la valeur M à ladite valeur de somme, et pour incrémenter ledit premier compteur d'adresses indiquant ladite position de mémoire dudit tampon d'entrée, comprenant un moyen de commande (1) pour effectuer répétitivement lesdites opérations de stockage, lesdites opérations d'actualisation et lesdites opérations d'incrémentation, jusqu'à ce que les données d'éléments d'image desdits M d'éléments d'image aient été stockées dans ledit tampon de sortie.

FIG. 1

N=3

| 0 | 1 | 2 | 3 |
|---|---|---|---|

ADDRESS

| 1 | 0 | 1 |
|---|---|---|

INPUT BUFFER
2

Ⓐ Ⓑ Ⓒ Ⓓ Ⓔ

ADDRESS

| 1 | 0 | 0 | 1 | 1 |
|---|---|---|---|---|

OUTPUT BUFFER
3

| 0 | 1 | 2 | 3 | 4 | 5 |
|---|---|---|---|---|---|

M=5

FIG. 2

N=5

| 0 | 1 | 2 | 3 | 4 | 5 |
|---|---|---|---|---|---|

ADDRESS

| 0 | 0 | 0 | 0 | 1 |
|---|---|---|---|---|

INPUT BUFFER
2

Ⓐ Ⓑ Ⓒ

ADDRESS

| 0 | 0 | 1 |
|---|---|---|

OUTPUT BUFFER
3

| 0 | 1 | 2 | 3 |
|---|---|---|---|

M=3

FIG. 4

## FIG. 3

- RESET ADDRESS COUNTER 7 TO 0
- RESET ADDRESS COUNTER 8 TO 0
- STORE -N IN REGISTER 4
- STORE M IN REGISTER 5
- STORE S IN REGISTER 6

31

BOTH PEL ADDRESSES OF COUNTERS 7 AND 8 EXCEED ORIGINAL IMAGE AND LAST PEL ADDRESS OF SCALED IMAGE

32

YES → END

33

NO

VALUE OF REGISTER 6 < 0

34

YES

NO

36

- UPDATE VALUE OF REGISTER 6 BY ADDING M TO VALUE
- INCREMENT ADDRESS COUNTER 7 BY +1

35

- STORE PEL DATA FROM BUFFER 2 TO BUFFER 3
- UPDATE VALUE OF REGISTER 6 BY ADDING -N TO VALUE
- INCREMENT ADDRESS COUNTER 8 BY +1

FIG. 5